# EUROPÄISCHE PATENTANMELDUNG

(11) **EP 3 929 233 A1**
(43) Veröffentlichungstag der Anmeldung: **29.12.2021**
(21) Anmeldenummer: 20182297.0
(22) Anmeldetag: 25.06.2020
(51) Int. Cl.: C08G 18/20, C08G 18/18, C08G 18/16, C08G 18/80, C08G 18/42, C09D 175/06

(54) **REAKTIVE POLYURETHAN-ZUSAMMENSETZUNGEN**

(71) Anmelder: Evonik Operations GmbH, 45128 Essen (DE)
(72) Erfinder: ELMER, Lisa-Maria, 48145 Münster (DE); SPYROU, Emmanouil, 46514 Schermbeck (DE); GOLLAN, Elke, 44653 Heme (DE); SCHÜLLER, Jessika, 56767 Gunderath (DE); LANGKABEL, Eike, 41844 Wegberg (DE); RUNIEWICZ, Chris Andre, 45772 Marl (DE); PELEIKIS, Thorsten Charly, 45891 Gelsenkirchen (DE); HENSCHKE, Andrea, 48249 Dülmen (DE)
(74) Vertreter: Evonik Patent Association

(57) **Zusammenfassung**

Gegenstand der vorliegenden Erfindung sind Zusammensetzungen umfassend A) mindestens eine Uretdiongruppen-haltige Komponente, basierend auf mindestens einem aliphatischen, cycloaliphatischen, aromatischen und/oder (cyclo)aliphatischen Isocyanat und mindestens einer Hydroxylgruppen-haltigen Verbindung, B) mindestens eine Hydroxylgruppen-haltige Komponente, C) mindestens einen Katalysator ausgewählt aus Verbindungen mit mindestens einem gegebenenfalls bicyclisch gebundenem tertiären oder aromatischen Stickstoffatom, und D) mindestens einen Co-Katalysator mit mindestens einer Epoxidgruppe, Verfahren zu ihrer Herstellung und ihre Verwendung.

## Beschreibung

Die Erfindung betrifft reaktive Uretdiongruppen-haltige Polyurethanzusammensetzungen, die bei besonders niedrigen Einbrenntemperaturen aushärten, ein Verfahren zu ihrer Herstellung und ihre Verwendung zur Herstellung von Beschichtungsmitteln (insbesondere Lacken), Klebstoffen oder Kunststoffen.

Extern oder intern blockierte Polyisocyanate stellen wertvolle Vernetzer für thermisch vernetzbare Polyurethan (PUR)-Lack- und Klebstoffzusammensetzung dar.

So beschreibt z. B. DE 27 35 497 A1 PUR-Lacke enthaltend ε-Caprolactam-biockierte Polyisocyanate und Hydroxylgruppen-haltige Komponenten. Die Vernetzer, deren Herstellung in der DE 27 12 931 C2 beschrieben wird, bestehen aus mit ε-Caprolactam blockiertem Isocyanuratgruppen-enthaltendem IPDI oder TMD. Es sind jedoch auch Urethan-, Biuret- oder Harnstoffgruppen-haltige Polyisocyanate mit blockierten Isocyanatgruppen bekannt.

Der Nachteil extern blockierter Systeme beruht auf der erforderlichen Abspaltung des Blockierungsmittels während der thermischen Vernetzungsreaktion. Damit das Blockierungsmittel nicht in die Umwelt entweicht, müssen besondere Vorkehrungen zur Reinigung der Abluft und Wiedergewinnung des Blockierungsmittels getroffen werden. Zudem weisen die Vernetzer eine geringe Reaktivität auf, so dass Härtungstemperaturen oberhalb von 170 °C erforderlich werden.

DE 30 30 572 A1 beschreibt ein Verfahren zur Herstellung Uretdiongruppen-haltiger Polyadditionsverbindungen, deren terminale Isocyanatgruppen mit Diolen und ggf. Monoalkoholen oder Monoaminen irreversibel blockiert sind. Nachteilig sind dabei insbesondere die Ketten abbrechenden Bestandteile der Vernetzer, die zu geringer Netzwerkdichte der PUR-Lackbeschichtungen und damit zu mäßiger Lösungsmittelbeständigkeit führen.

Hydroxylgruppen-terminierte Uretdiongruppen-haltige Polyadditionsverbindungen auf Basis von IPDI sind Gegenstand der EP 0 669 353 B1. Sie weisen aufgrund ihrer Funktionalität von zwei eine verbesserte Resistenz gegenüber Lösungsmitteln auf. Zusammensetzungen enthaltend die Uretdiongruppen-haltigen Polyisocyanate, hydroxylgruppenhaltige Polymere und Katalysatoren ist gemeinsam, dass sie bei der Härtungsreaktion keine flüchtigen Verbindungen abgeben. Allerdings liegen die Einbrenntemperaturen mit mindestens 150 °C für 4 bis 60 Minuten auf hohem Niveau.

In der WO 00/34355 A1 werden härtbare uretdiongruppenhaltige Massen umfassend Hydroxylgruppen-haltige Bindemittel-Komponenten, Uretdiongruppen und ggf. freie Isocyanatgruppen aufweisende Polyadditionsverbindungen, Lewissäure-Katalysatoren und weitere Katalysatoren beschrieben. Bei den Lewissäure-Katalysatoren handelt es sich vorzugsweise um metallorganische Verbindungen. In den Beispielen werden die Katalysatoren DBTL, Dibutylzinndibutylat und Zinkacetylacetonat eingesetzt. Der Einsatz von Metallen in Gegenständen des täglichen Gebrauchs ist aber aus toxikologischen Gründen nachteilig.

EP 0 803 524 A1 offenbart Polyurethan-Pulverlacke umfassend eine Hydroxylgruppen-haltige Bindemittelkomponente, eine unterhalb von 40 °C in fester und oberhalb von 125 °C in flüssiger Form vorliegende Uretdiongruppen und ggf. freie Isocyanatgruppen aufweisende Polyadditionsverbindung, mindestens einen N,N,N'-trisubstituierte Amidinstrukturen enthaltenden Katalysator mit einem Amidingruppengehalt von 12,0 - 47,0 Gew.-% und ggf. weitere Katalysatoren, bei denen es sich um übliche in der Polyurethanchemie bekannte Katalysatoren handelt. Die in den Beispielen offenbarten Beschichtungen werden bei 150 °C oder darüber für 15 Minuten gehärtet und haben den auf die Amidine zurückzuführenden Vorteil, dass bereits bei niedrigeren Temperaturen vollelastische Beschichtungen erhalten werden können. Die offenbarten Systeme zeigen jedoch eine beträchtliche Vergilbung, die im Beschichtungsbereich allgemein unerwünscht ist und auf die die reaktiven Stickstoffatome in den Amidinen zurückzuführen ist. Diese können sich mit Luftsauerstoff zu N-Oxiden umsetzen, die für die Verfärbung verantwortlich sind. Weiterhin sind die Härtungstemperaturen weiterhin sehr hoch, was die Anwendbarkeit zur Beschichtung von Substraten aus Kunststoff verhindert.

In der WO 2016/202568 A1 wird ein in situ gebildeter Alkoholat-Katalysator für Polyurethane aus einem Lithiumhalogenid und einer Epoxy-Komponente beschrieben, welcher eine Vernetzung bei niedrigen Temperaturen ermöglicht. Die Anwendbarkeit für Uretdion-haltige Polyurethanhärter oder zusammen mit Amidinstrukturen enthaltenden Katalysatoren wird jedoch nicht offenbart.

EP 2 977 395 A1 offenbart Uretdiongruppen-haltige Polyurethanzusammensetzungen enthaltend mindestens eine Uretdiongruppen-haltige Verbindung, mindestens ein Hydroxylgruppen-haltiges Polymer, mindestens einen Katalysator, bei dem es sich um ein Carbonatsalz mit quarternären Ammonium- und/oder Phosphononiumionen handelt, und mindestens einen Cokatalysator mit Epoxidgruppen. Die Eignung der Epoxidgruppen-haltigen Cokatalysatoren für Amidinsysteme wird jedoch nicht offenbart. Vielmehr werden diese generell als nachteilig herausgestellt [0006].

Es stellt sich vorliegend die Aufgabe, Uretdiongruppen-haltige Polyurethanzusammensetzungen bereitzustellen, bei denen der Einsatz metallischer oder metallorganischer Katalysatoren aus toxikologischen und arbeitshygienischen Gründen vermieden wird und die vorzugsweise die auf Katalysatoren mit Amidin-Strukturen zurückzuführenden Vorteile aufweisen. Weiterhin sollen sie darüber hinaus bei besonders niedrigen Temperaturen aushärten und somit für die Beschichtung hochtemperaturinstabiler Substrate (wie z. B. Kunststoffe) geeignet sein. Außerdem stellt sich die Aufgabe, Uretdiongruppen-basierte Polyurethanzusammensetzungen bereitzustellen, die sich zur Erzeugung hochglänzender oder matter, licht- und wetterstabiler hochreaktiver Beschichtungen, insbesondere Lack- und Klebstoffzusammensetzungen, eignen.

Die Aufgabe wird vorliegend gelöst durch die erfindungsgemäßen Zusammensetzungen umfassend
A) mindestens eine Uretdiongruppen-haltige Komponente, basierend auf mindestens einem aliphatischen, cycloaliphatischen, aromatischen und/oder (cyclo)aliphatischen Isocyanat und mindestens einer Hydroxylgruppen-haltigen Verbindung,
B) mindestens eine Hydroxylgruppen-haltige Komponente,
C) mindestens einen Katalysator ausgewählt aus Verbindungen mit mindestens einem gegebenenfalls bicyclisch gebundenem tertiären oder aromatischen Stickstoffatom, und
D) mindestens einen Co-Katalysator mit mindestens einer Epoxidgruppe.

Mit Hilfe der erfindungsgemäßen hochreaktiven und somit bei Niedrigtemperatur härtenden Polyurethanzusammensetzungen kann bereits ab 100 °C ausgehärtet und somit Energie gespart werden. Wird doch bei höherer Temperatur gehärtet, kann die Aushärtungszeit vermindert werden, was ebenfalls zu einer Energieersparnis führt. Weiterhin lassen sich mit den erfindungsgemäßen Zusammensetzungen auch viele temperatursensible Substrate beschichten bzw. verkleben, die bei höheren Temperaturen, insbesondere ab 180 °C, eine unerwünschte Vergilbungs-, Zersetzungs- und/oder Versprödungserscheinung zeigen würden. Neben weitestgehend temperaturbeständigen Metallen und Glas kann somit mit den erfindungsgemäßen Zusammensetzungen auch Holz, Leder, Kunststoffe, MDF-Platten und Aluminium beschichtet werden. Bei letztgenanntem kann durch die Vermeidung einer zu hohen Temperaturbelastung eine unerwünschte Änderung der Kristallstruktur vermieden werden.

Die erfindungsgemäßen Zusammensetzungen können zur Erzielung vorteilhafter Eigenschaften neben den vier Bestandteilen A) bis D) noch weitere Bestandteile aufweisen. Weisen Sie weitere Bestandteile auf, handelt es sich hierbei bevorzugt um E) Lösemittel und/oder F) Hilfs- und Zusatzstoffe. Bevorzugt beträgt somit die Summer aller Komponenten A) - F) 100 Gew.-%.

Bevorzugt sind somit Zusammensetzungen bestehend aus
A) mindestens einer Uretdiongruppen-haltigen Komponente, basierend auf mindestens einem aliphatischen, cycloaliphatischen, aromatischen und/oder (cyclo)aliphatischen Isocyanat und mindestens einer Hydroxylgruppen-haltigen Verbindung,
B) mindestens einer Hydroxylgruppen-haltiger Komponente,
C) mindestens einem Katalysator ausgewählt aus Verbindungen mit mindestens einem gegebenenfalls bicyclisch gebundenem tertiären oder aromatischen Stickstoffatom,
D) mindestens einem Co-Katalysator mit mindestens einer Epoxidgruppe,
E) gegebenenfalls mindestens einem Lösemittel und
F) gegebenenfalls mindestens einem Hilfs- oder Zusatzstoff.

Bevorzugt bestehen sie aus den vier Bestandteilen A) bis D), d.h. die Summe aller Komponenten A) - D) beträgt 100 Gew.-%.

### A) Uretdiongruppen-haltige Verbindung

Bei der mindestens einen auf mindestens einem aliphatischen, cycloaliphatischen, aromatischen und/oder (cyclo)aliphatischen Isocyanat und mindestens einer Hydroxylgruppen-haltigen Verbindung basierenden Uretdiongruppen-haltigen Verbindung handelt es sich um ein Umsetzungsprodukt mindestens eines Uretdiongruppen-haltigen Isocyanats mit mindestens einer Hydroxylgruppen-haltigen Verbindung. Vorzugsweise wird ein Isocyanat und eine oder zwei Hydroxylgruppen-haltige Verbindungen umgesetzt.

Uretdiongruppen-haltige Isocyanate als Ausgangsverbindungen für die Komponente A) sind wohlbekannt und werden beispielsweise in US 4 476 054 A, US 4 912 210 A, US 4 929 724 A sowie EP 0 417 603 A1 beschrieben. Industriell relevante Verfahren zur Dimerisierung von Isocyanaten zu Uretdionen sind dem Fachmann bekannt. Im Allgemeinen erfolgt die Umsetzung von Isocyanaten zu Uretdionen in Gegenwart löslicher Dimerisierungskatalysatoren, wie z. B. Dialkylaminopyridinen, Trialkylphosphinen, Phosphorigsäure-triamiden oder Imdidazolen. Die Reaktion - optional in Lösungsmitteln, bevorzugt aber in Abwesenheit von Lösungsmitteln durchgeführt - wird bei Erreichen eines gewünschten Umsatzes durch Zusatz von Katalysatorgiften abgestoppt. Überschüssiges monomeres Isocyanat wird im Anschluss durch Kurzwegverdampfung abgetrennt. Ist der Katalysator flüchtig genug, kann das Reaktionsgemisch im Zuge der Monomerabtrennung vom Katalysator befreit werden. Auf den Zusatz von Katalysatorgiften kann in diesem Fall verzichtet werden. Grundsätzlich ist zur Herstellung von Uretdiongruppen-haltigen Isocyanaten A) eine breite Palette von Isocyanaten geeignet.

Das mindestens eine erfindungsgemäß eingesetzte Isocyanat zur Herstellung der mindestens einen Uretdiongruppen-haltigen Verbindung A) kann aus beliebigen aliphatischen, cycloaliphatischen aromatischen und/oder (cyclo)aliphatischen Isocyanaten ausgewählt sein. Bevorzugt handelt es sich bei den eingesetzten Isocyanaten um Di- oder Polyisocyanate, wobei unter Polyisocyanaten solche mit drei oder mehr Isocyanatgruppen zu verstehen sind. Unter (cyclo)aliphatischen Diisocyanaten versteht der Fachmann hinlänglich gleichzeitig cyclisch und aliphatisch gebundene NCO-Gruppen, wie es z. B. beim Isophorondiisocyanat der Fall ist. Demgegenüber versteht man unter cycloaliphatischen Diisocyanaten solche, die nur direkt am cycloaliphatischen Ring gebundene NCO-Gruppen aufweisen, z. B. H₁₂MDI.

Bevorzugt ist das zur Herstellung der Uretdiongruppen-haltige Komponente A) eingesetzte mindestens eine Isocyanat ausgewählt aus der Gruppe bestehend aus Isophorondiisocyanat (IPDI), Hexamethylendiisocyanat (HDI), 2,2'- Dicyclohexylmethandiisocyanat, 2,4'-Dicyclohexylmethandiisocyanat, 4,4'- Dicyclohexylmethandiisocyanat (H₁₂MDI), 2-Methylpentadiisocyanat (MPDI), 2,2,4-Trimethylhexamethylendiisocyanat/2,4,4-Trimethylhexamethylendiisocyanat (TMDI), Norbornandiisocyanat (NBDI), 1,2-Cyclohexyldi(methylisocyanat), 1,3-Cyclohexyldi(methylisocyanat), 1,4-Cyclohexyldi(methylisocyanat), 1,2-Xylylendisocyanat, 1,3- Xylylendisocyanat und 1,4-Xylylendisocyanat. Ganz besonders bevorzugt wird das eingesetzte mindestens eine Isocyanat ausgewählt aus IPDI, H₁₂MDI und HDI.

Die Umsetzung dieser Uretdiongruppen tragenden Polyisocyanate zu Uretdiongruppen-haltigen Komponenten A) erfolgt über Reaktion der freien NCO-Gruppen mit mindestens einer Hydroxylgruppen-haltigen Verbindung, bevorzugt ausgewählt aus der Gruppe bestehend aus Di-, Tri- und/oder Tetraalkoholen, Polyestern, Polythioethern, Polyethern, Polycaprolactamen, Polyepoxiden, Polyesteramiden und Polyurethanen. Da diese Verbindungen mindestens zwei Hydroxylgruppen aufweisen, werden sie auch als Kettenverlängerer bezeichnet. Vorzugsweise können bei der Umsetzung außerdem Monoamine und/oder Monoalkohole als Kettenabbrecher Verwendung finden, Entsprechende Verbindungen wurden schon häufig beschrieben (EP 0 669 353 A1, EP 0 669 354 A1, DE 30 30 572 A1, EP 0 639 598 A1 oder EP 0 803 524 A1). Bevorzugt als Kettenverlängerer werden monomere Dialkohole und Polyester. Abgesehen von den Uretdiongruppen können die Uretdiongruppen-haltigen Komponenten A) auch Isocyanurat-, Biuret-, Allophanat-, Urethan- und/oder Harnstoff-Strukturen aufweisen.

Bevorzugt werden Uretdiongruppen-haltige Verbindungen A) auf der Basis von IPDI, H₁₂MDI und/oder HDI, allein oder in Mischungen, eingesetzt.

Die Zusammensetzung enthält bevorzugt die Uretdiongruppen-haltige Verbindung bzw. die Uretdiongruppen-haltigen Verbindungen A) in einem Anteil von 5 bis 98,7 Gew.-%, bezogen auf die Gesamtmasse aller Komponenten.

Vorzugsweise weist die Uretdiongruppen-haltige Verbindung einen freien NCO-Gehalt von kleiner 5 Gew.-% und einen Uretdiongehalt von 2 bis 25, weiter bevorzugt 6 - 25 Gew.-% (berechnet als C₂N₂O₂, Molekulargewicht 84) auf. Die Ermittlung des freien NCO-Gehaltes erfolgt über Rücktitration des Aminüberschusses nach Umsetzung mit Dibutylamin (EN ISO 14896).

### B) Hydroxylgruppen-haltige Komponente

Bevorzugte Hydroxylgruppen-haltige Komponenten B) können ausgewählt werden aus der Gruppe bestehend aus entsprechenden Hydroxylgruppen-haltigen Polyestern, Polyethern, Polyacrylaten, Polyurethanen, Polyamidaminen, Polyethern und Polycarbonaten. Solche Bindemittel beschreiben beispielsweise EP 0 669 354 A1 und EP 0 254 152 A1. Sie können amorph, kristallin oder teilkristallin sein. Selbstverständlich können auch Mischungen dieser Polymere eingesetzt werden.

Bevorzugt wird jedoch nur eine Hydroxylgruppen-haltige Verbindung eingesetzt.

Besonders bevorzugt ist die Hydroxylgruppen-haltige Komponente B) ein Polyester mit einer OH-Zahl von 40 bis 650, einem zahlenmittleren Molekulargewicht von 350 bis 5.000 g/mol und einer Säurezahl von 0,1 bis 10 mg KOH/g.

Die Zusammensetzung enthält bevorzugt die Hydroxylgruppen-haltige Komponente bzw. die Hydroxylgruppen-haltigen Komponenten zu 1 - 90 Gew.-%, besonders bevorzugt zu 15-80 Gew.-%, bezogen auf die Gesamtmasse aller Komponenten. Vorzugsweise weist sie eine OH-Zahl von 20 und 1000 mg KOH/Gramm auf.

Die OH-Zahl, die Säurezahl und das zahlenmittlere Molekulargewicht (Mn) wird vorliegend wie folgt bestimmt: OH-Zahl - titrimetrisches Verfahren mit Katalysator (DIN EN ISO 4629-2); Säurezahl - Titration (DIN EN ISO 2114); zahlenmittleres Molekulargewicht (Mn) - Ermittlung aus der OH-Zahl.

### C) Katalysator mit tertiärem oder aromatischen Stickstoffatom

Die erfindungswesentlichen Katalysatoren C) sind tertiäre oder aromatische Stickstoff-haltige Verbindungen, wie sie z. B. in EP 0 803 524 A1 beschrieben sind. Es können mehrere Katalysatoren C) oder nur einer eingesetzt werden. Bevorzugt wird nur ein Katalysator C) eingesetzt.

Bevorzugte Katalysatoren C) weisen die Formel NR¹R²R³ auf, wobei R¹, R² und R³ unabhängig voneinander
- ein linearer oder verzweigter, ggf. Ci-Cio-substituierter C₁-C₁₀-Alkyl-, -Aryl-, -Aralkyl- oder - Heteroarylrest ist, und/oder
- mindestens zwei Reste ausgewählt aus R¹, R² und R³ einen verbrückenden C₄-C₇-Alkylen- oder -Heteroalkylenrest bilden oder
- alle drei Reste R¹, R² und R³ zusammen mit N einen ggf. anellierten und/oder ggf. C₁-C₁₀-substituierten aromatischen Heterocyclus bilden können.

Besonders bevorzugt weisen die erfindungsgemäßen Katalysatoren dabei maximal zwei jeweils aromatisch oder tertiär gebundene Stickstoffatome auf. Mit diesen Katalysatoren können zusammen mit Epoxidgruppen-haltigen Co-Katalysatoren insbesondere im Vergleich mit Katalysatorsystemen umfassend Katalysatoren mit Amidin-Struktur und Epoxidgruppen-haltigen Co-Katalysatoren bei besonders niedrigen Temperaturen gehärtet werden.

Besonders bevorzugte Katalysatoren C) sind ausgewählt aus der Gruppe bestehend aus Pyridin, 4-(Dimethylamino)-pyridin (DMAP), Triethylamin und 1,4 Diazabicylco[2.2.2]octan (DABCO).

Selbstverständlich können auch Mischungen solcher Katalysatoren verwendet werden.

Besonders bevorzugt wird 4-(Dimethylamino)-pyridin eingesetzt.

Eine erfindungsgemäße Variante schließt die polymere Anbindung der Katalysatoren C) an die Verbindungen (Härter) A) oder an die Hydroxylgruppen-haltigen Polymere B) mit ein. So können z. B. freie Alkohol-, Thio- oder Aminogruppen der Stickstoff-haltigen Heterozyklen mit Säure , Isocyanat-, oder Glycidylgruppen der Verbindungen (Härter) A) oder Hydroxylgruppen haltige Polymere B) umgesetzt werden, um die Katalysatoren C) in den polymeren Verbund zu integrieren.

Die Zusammensetzung enthält bevorzugt den Katalysator oder die Katalysatoren mit tertiärem oder aromatischen Stickstoffatom zu 0,01 bis 5 Gew.-%, besonders bevorzugt zu 0,03 bis 3 Gew. %, ganz besonders bevorzugt zu 0,05 bis 2 Gew. %, bezogen auf die Gesamtmasse der Komponenten.

### D) Epoxidgruppen-haltige Co-Katalysatoren

Epoxidgruppen aufweisende Co-Katalysatoren D) sind in der Lackchemie allgemein bekannt.

Bevorzugt eingesetzt werden können dabei bevorzugt Diglycidylether auf Basis von Bisphenol A (z. B. EPIKOTE^{®} 828, Schell), Triglycidylether auf Basis von Trimellitsäure (z. B. Araldit PT 912, Huntsman), Triglycidylether-isocyanurat (TGIC), Versaticsäureglycidylester, Terephthalsäurediglycidylether, Trimellitsäuretriglycidylether, Ethylhexylglycidylether, Butylglycidylether und Pentaerythrittetraglycidylether (z. B. Polypox R 16, UPPC AG oder andere Polypoxtypen mit freien Epoxygruppen). Selbstverständlich kommen auch Mischungen solcher Substanzen in Frage. Besonders bevorzugt wird jedoch nur ein Co-Katalysator D) eingesetzt.

Besonders bevorzugt eingesetzt wird Trimellitsäuretriglycidylether und Bisphenol A-Diglycidylether.

Die Zusammensetzung enthält bevorzugt den Co-Katalysator bzw. die Co-Katalysatoren zu 0,1 - 10 Gew.-%, besonders bevorzugt 0,5 bis 3 Gew.-%, bezogen auf die Gesamtmasse der Komponenten.

### E) Lösemittel

Die erfindungsgemäßen Zusammensetzungen können Lösemittel aufweisen.

Bevorzugte Lösemittel E) sind alle bei Raumtemperatur und Normaldruck flüssigen Substanzen, die nicht mit anderen Inhaltstoffen reagieren. Besonders bevorzugte Lösemittel E) sind Aceton, Methylethylketon, Ethylacetat, Butylacetat, Xylol, Solvent Naphtha, Methoxypropylacetat und Dibasicester.

### F) Hilfs- und Zusatzstoffe

Die erfindungsgemäßen Zusammensetzungen können weiterhin Hilfs- und Zusatzstoffe aufweisen.

Bevorzugt einsetzbare Zusatzstoffe sind ausgewählt aus Verlaufsmitteln (insbesondere Polysilicone oder Acrylate), Lichtschutzmitteln (insbesondere sterisch gehinderte Amine) und anderen Hilfsmitteln, wie sie z. B. in EP 0 669 353 beschrieben werden.

Bevorzugt werden Hilfs- und Zusatzstoffe in einer Gesamtmenge von 0,05 bis 5 Gew.-%, bezogen auf die Gesamtmasse der Zusammensetzung zugesetzt.

### Verfahren zur Herstellung

Gegenstand der vorliegenden Erfindung ist auch ein Verfahren zur Herstellung der erfindungsgemäßen Zusammensetzungen. Dabei werden die einzelnen Bestandteile der erfindungsgemäßen Zusammensetzungen, für die im Weiteren die bereits zuvor getätigten bevorzugten Ausführungsformen gelten, in beheizbaren Vorrichtungen bei Temperaturen kleiner gleich 130 °C miteinander vermischt. Das Vermischen kann bei Raumtemperatur erfolgen. Bevorzugt erfolgt das Vermischen jedoch zwischen 30 °C und 120 °C. Die Homogenisierung aller Bestandteile der erfindungsgemäßen Zusammensetzungen erfolgt bevorzugt in beheizbaren Aggregaten ausgewählt aus Rührkesseln, Knetern und Extrudern.

Die gut vermischte Masse kann durch geeignetes Auftragen, insbesondere durch Walzen, Sprühen, Spritzen, Tauchen oder Rakeln, auf das jeweilige Substrat aufgebracht werden. Bevorzugte Substrate sind Metall-, Kunststoff-, Glas-, Holz-, MDF(Middle Density Fiber Boards)- oder Ledersubstrate. Nach dem Auftrag können die beschichteten Werkstücke zur Aushärtung für 4 bis 60 Minuten auf eine Temperatur von 60 bis 220 °C, vorzugsweise für 6 bis 30 Minuten auf 80 bis 160 °C, erhitzt werden. Besonders bevorzugt können die erfindungsgemäßen Zusammensetzungen bei Temperaturen von 110 bis 150 °C, besonders bevorzugt von 120 bis 140 °C innerhalb einer Zeit von 5 bis 30 Minuten gehärtet werden.

Gegenstand der Erfindung ist somit auch ein Verfahren zur Härtung einer auf ein Substrat aufgebrachten Beschichtung der erfindungsgemäßen Zusammensetzung bei einer Temperatur von 60 - 220 °C innerhalb einer Zeit von 4-60 Minuten, bevorzugt innerhalb einer Zeit von 6 bis 30 Minuten bei einer Temperatur von 80 bis 160 °C, ganz besonders bevorzugt bei einer Temperatur von 110 bis 150 °C (noch weiter bevorzugt von 120 bis 140 °C) innerhalb einer Zeit von 5 bis 30 Minuten.

Gegenstand der Erfindung ist auch die Verwendung der erfindungsgemäßen Zusammensetzungen für die Beschichtung von Metall-, Kunststoff-, Glas-, Holz-, MDF(Middle Density Fiber Boards)- oder Ledersubstraten oder auf sonstigen hitzeresistenten Untergründen.

Bevorzugter Gegenstand der Erfindung ist auch die Verwendung der erfindungsgemäßen Polyurethanzusammensetzungen in Lacken für Metall-, Kunststoff-, Glas-, Holz-, MDF(Middle Density Fiber Boards)- oder Ledersubstrate oder auf sonstigen hitzeresistenten Untergründen.

Bevorzugter Gegenstand der Erfindung ist auch die Verwendung der erfindungsgemäßen Polyurethanzusammensetzungen in Klebstoffzusammensetzungen für die Verklebung von Metall-, Kunststoff-, Glas-, Holz-, MDF- oder Ledersubstraten oder sonstigen hitzeresistenten Untergründen.

Ebenfalls Gegenstand der Erfindung sind Metallbeschichtungszusammensetzungen, insbesondere für Automobilkarossen, Motor- und Fahrräder, Gebäudeteile und Haushaltsgeräte, Holzbeschichtungszusammensetzungen, MDF-Beschichtungen, Glasbeschichtungszusammensetzungen, Lederbeschichtungszusammensetzungen und Kunststoffbeschichtungszusammensetzungen.

Gegenstand der Erfindung ist auch die Verwendung von tertiären oder aromatischen Stickstoff-haltigen Verbindungen zusammen mit Epoxidgruppen-haltigen Co-Katalysatoren als Katalysatoren in Polyurethanbeschichtungszusammensetzungen.

Nachfolgend wird der Gegenstand der Erfindung anhand von Beispielen näher erläutert.

### Beispiele:

### Beispiel 1:

### 1. Einsatzstoffe

| **Einsatzstoffe** | **Produktbeschreibung, Hersteller** |
|---|---|
| Uretdion-Modell-Vernetzer | Komponente A), Vernetzer bestehend aus IPDI-Uretdion, 1,3-Propandiol, Trimethylolpropan, Evonik Industries AG, Resource Efficiency GmbH, auf Basis von IPDI |
| POLYOL 4640 | Komponente B), Polyester, OHZ 630 mg KOH/g, Perstorp |
| DMAP | Komponente C), Stickstoff-Komponente 4-Dimethyl-aminopyridin (DMAP), Aldrich |
| ARALDIT PT912 | Komponente D), Epoxykomponente, Huntsman (Mischung aus Terephthalsäurediglycidylether und Trimellitsäuretriglycidylether) |
| 1,5-DIAZABICYCLO-[4.3.0]NON-5-EN (DBN) | Pyrrolidino[1,2:a]1,4,5,6-tetrahydropyrimidine, Aldrich |
| Aceton | Merck |

| | |
|---|---|
| OHZ: OH-Zahl | |

### 2. Lack-Modellsysteme

### (Angaben in Gew.-%):

| **Beispiele** | **Uretdion-Vernetzer** | **POLYOL 4640** | **DMAP** | **PT 912** | **DBN** | **Aceton** |
|---|---|---|---|---|---|---|
| 1* | 52,51 | 12,48 | | | | 35,01 |
| 2* | 52,46 | 12,47 | 0,10 | | | 34,97 |
| 3* | 52,34 | 12,43 | | | 0,34 | 34,89 |
| 4 | 51,95 | 12,35 | 0,10 | 1,00 | | 34,60 |

| | | | | | | |
|---|---|---|---|---|---|---|
| * nicht erfindungsgemäße Vergleichsbeispiele | | | | | | |

Uretdion-Vernetzer in Aceton gelöst, POLYOL 4640 und eventuell Katalysatoren wurden eine Stunde bei Raumtemperatur gerührt. Anschließend wurde das Produkt mittels dynamischer Differenzkalorimetrie (DSC) analysiert.

| **Beispiele** | **endothermer Peak [°C / J g⁻¹]** | **exothermer Peak (Reaktion) [°C / J g⁻¹]** | **Tg 2. Heizen [°C]** |
|---|---|---|---|
| 1* | 66/45 | 194/181 | 124 |
| 2* | 55/44 | 194/186 | 124 |
| 3* | 67/35 | 165/165 | 124 |
| 4 | 63/35 | 108/46 168/24 | 130 |

| | | | |
|---|---|---|---|
| * nicht erfindungsgemäße Vergleichsbeispiele; Tg: Glasübergangstemperatur | | | |

Die Zusammensetzung gemäß Beispiel 4 enthaltend einen Katalysator mit einem aromatisch und einem tertiär gebundenen Stickstoffatom und einen Epoxidgruppen-haltigen Co-Katalysator reagiert bereits bei sehr niedrigen Temperaturen und weist den höchsten Tg auf.

Die Vergleichsbeispiele 1*, 2* und 3* härten erst bei deutlich höheren Temperaturen aus.

## Patentansprüche

1. Zusammensetzung umfassend
A) mindestens eine Uretdiongruppen-haltige Komponente, basierend auf mindestens einem aliphatischen, cycloaliphatischen, aromatischen und/oder (cyclo)aliphatischen Isocyanat und mindestens einer Hydroxylgruppen-haltigen Verbindung,
B) mindestens eine Hydroxylgruppen-haltige Komponente,
C) mindestens einen Katalysator ausgewählt aus Verbindungen mit mindestens einem gegebenenfalls bicyclisch gebundenem tertiären oder aromatischen Stickstoffatom, und
D) mindestens einen Co-Katalysator mit mindestens einer Epoxidgruppe.

2. Zusammensetzung nach Anspruch 1, bestehend aus
A) mindestens einer Uretdiongruppen-haltigen Komponente, basierend auf mindestens einem aliphatischen, cycloaliphatischen, aromatischen und/oder (cyclo)aliphatischen Isocyanat und mindestens einer Hydroxylgruppen-haltigen Verbindung,
B) mindestens einer Hydroxylgruppen-haltiger Komponente,
C) mindestens einem Katalysator ausgewählt aus Verbindungen mit mindestens einem gegebenenfalls bicyclisch gebundenem tertiären oder aromatischen Stickstoffatom,
D) mindestens einem Co-Katalysator mit mindestens einer Epoxidgruppe,
E) gegebenenfalls mindestens einem Lösemittel und
F) gegebenenfalls mindestens einem Hilfs- oder Zusatzstoff.

3. Zusammensetzung nach Anspruch 1 oder 2, **dadurch gekennzeichnet, dass** das mindestens eine Isocyanat ausgewählt wird aus der Gruppe bestehend aus Isophorondiisocyanat (IPDI), Hexamethylendiisocyanat (HDI), 2,2'- Dicyclohexylmethandiisocyanat, 2,4'-Dicyclohexylmethandiisocyanat, 4,4'- Dicyclohexylmethandiisocyanat (H₁₂MDI), 2-Methylpentadiisocyanat (MPDI), 2,2,4-Trimethylhexamethylendiisocyanat/2,4,4-Trimethylhexamethylendiisocyanat (TMDI), Norbornandiisocyanat (NBDI), 1,2-Cyclohexyldi(methylisocyanat), 1,3-Cyclohexyldi(methylisocyanat), 1,4-Cyclohexyldi(methylisocyanat), 1,2- Xylylendisocyanat, 1,3- Xylylendisocyanat und 1,4-Xylylendisocyanat.

4. Zusammensetzung nach einem der vorhergehenden Ansprüche, **dadurch gekennzeichnet, dass** die Hydroxylgruppen-haltige Komponente, auf der die Uretdion-gruppenhaltige Komponente basiert, ausgewählt wird aus der Gruppe bestehend aus Di-, Tri- und/oder Tetraalkoholen, Polyestern, Polythioethern, Polyethern, Polycaprolactamen, Polyepoxiden, Polyesteramiden und Polyurethanen.

5. Zusammensetzung nach einem der vorhergehenden Ansprüche, **dadurch gekennzeichnet, dass** die Zusammensetzung die mindestens eine Uretdiongruppen-haltige Komponente A) zu 5 bis 98,7 Gew.-%, bezogen auf die Gesamtmasse aller Komponenten aufweist.

6. Zusammensetzung nach einem der vorhergehenden Ansprüche, **dadurch gekennzeichnet, dass** die mindestens eine Hydroxylgruppen-haltige Komponente B) ausgewählt wird aus der Gruppe bestehend aus entsprechenden Hydroxylgruppen-haltigen Polyestern, Polyethern, Polyacrylaten, Polyurethanen, Polyamidaminen, Polyethern und Polycarbonaten.

7. Zusammensetzung nach Anspruch 6, durch gekennzeichnet, dass die Hydroxylgruppen-haltige Komponente ein Polyester mit einer OH-Zahl von 40 bis 650, einem zahlenmittleren Molekulargewicht von 350 bis 5.000 g/mol und einer Säurezahl von 0,1 bis 10 mg KOH/g ist.

8. Zusammensetzung nach einem der vorhergehenden Ansprüche, **dadurch gekennzeichnet, dass** die Zusammensetzung die mindestens eine Hydroxylgruppen-haltige Komponente B) zu 1 - 90 Gew.-%, bezogen auf die Gesamtmasse aller Komponenten, aufweist.

9. Zusammensetzung nach einem der vorhergehenden Ansprüche, **dadurch gekennzeichnet, dass** mindestens ein Katalysator C) die Formel NR¹R²R³ aufweist,
wobei R¹, R² und R³ unabhängig voneinander
- ein linearer oder verzweigter, ggf. Ci-Cio-substituierter C₁-C₁₀-Alkyl-, -Aryl-, -Aralkyl- oder - Heteroarylrest ist, und/oder
- mindestens zwei Reste ausgewählt aus R¹, R² und R³ einen verbrückenden C₄-C₇-Alkylen- oder -Heteroalkylenrest bilden oder
- alle drei Reste R¹, R² und R³ zusammen mit N einen ggf. anellierten und/oder ggf. C₁-C₁₀-substituierten aromatischen Heterocyclus bilden können.

10. Zusammensetzung nach einem der vorhergehenden Ansprüche, **dadurch gekennzeichnet, dass** mindestens ein Katalysator ausgewählt wird aus der Gruppe bestehend aus Pyridin, 4-(Dimethylamino)-pyridin (DMAP), Triethylamin und 1,4 Diazabicylco[2.2.2]octan (DABCO).

11. Zusammensetzung nach einem der vorhergehenden Ansprüche, **dadurch gekennzeichnet, dass** die Zusammensetzung den mindestens einen Katalysator C) zu 0,01 bis 5 Gew.-%, bezogen auf die Gesamtmasse der Komponenten aufweist.

12. Zusammensetzung nach einem der vorhergehenden Ansprüche, **dadurch gekennzeichnet, dass** der Co-Katalysator D) ausgewählt wird aus der Gruppe bestehend aus Diglycidylethern auf Basis von Bisphenol A, Triglycidylethern auf Basis von Trimellitsäure, Triglycidylether-isocyanurat (TGIC), Versaticsäureglycidylester, Terephthalsäurediglycidylether, Trimellitsäuretriglycidylether, Ethylhexylglycidylether, Butylglycidylether und Pentaerythrittetraglycidylether.

13. Zusammensetzung nach einem der vorhergehenden Ansprüche, **dadurch gekennzeichnet, dass** die Zusammensetzung den mindestens einen Co-Katalysator D) zu 0,1 bis 10 Gew.-%, bezogen auf die Gesamtmasse der Komponenten aufweist.

14. Verfahren zur Herstellung einer Zusammensetzung nach einem der vorhergehenden Ansprüche, **dadurch gekennzeichnet, dass**
A) mindestens eine Uretdiongruppen-haltige Komponente, basierend auf mindestens einem aliphatischen, cycloaliphatischen, aromatischen und/oder (cyclo)aliphatischen Isocyanat und mindestens einer Hydroxylgruppen-haltigen Verbindung,
B) mindestens eine Hydroxylgruppen-haltige Komponente,
C) mindestens ein Katalysator ausgewählt aus Verbindungen mit mindestens einem gegebenenfalls bicyclisch gebundenem tertiären oder aromatischen Stickstoffatom,
D) mindestens ein Co-Katalysator mit mindestens einer Epoxidgruppe,
E) gegebenenfalls mindestens ein Lösemittel und
F) gegebenenfalls mindestens ein Hilfs- oder Zusatzstoff
in einer beheizbaren Vorrichtung bei einer Temperatur kleiner gleich 130 °C miteinander vermischt wird.

15. Verwendung einer Zusammensetzung nach einem der Ansprüche 1 - 13 für die Beschichtung von Metall-, Kunststoff-, Glas-, Holz-, MDF- oder Ledersubstraten oder von hitzeresistenten Substraten.
